# EUROPEAN PATENT APPLICATION

(11) **EP 4 053 201 A1**
(43) Date of publication of application: **07.09.2022**
(21) Application number: 20880540.8
(22) Date of filing: 06.10.2020
(51) Int. Cl.: C08K 5/29, C08L 67/00, C08L 75/00, C08L 77/00, C08G 18/09

(54) **COMPATIBILIZER AND POLYESTER RESIN COMPOSITION**

(30) Priority: 28.10.2019 JP 2019194976
(71) Applicant: Nisshinbo Chemical Inc., Tokyo 103-8650 (JP)
(72) Inventor: SASAKI, Takahiro, Chiba-shi, Chiba 267-0056 (JP); KOTANI, Saori, Chiba-shi, Chiba 267-0056 (JP); TANIGUCHI, Akira, Chiba-shi, Chiba 267-0056 (JP); FUKASE, Atsuko, Chiba-shi, Chiba 267-0056 (JP)
(74) Representative: Steffan & Kiehne Patentanwälte PartG mbB
(86) International application number: PCT/JP2020/037821
(87) International publication number: WO 2021/085050

(57) **Abstract**

There is provided a compatibilizer for polyester resin which can produce better compatibility than conventional counterparts, and a polyester resin composition using the compatibilizer. The compatibilizer comprises a polycarbodiimide compound represented by the formula (1) describe below wherein the carbodiimide equivalent of the polycarbodiimide compound is 280 or higher; and in the formula (1), R¹ and R² are residues formed by eliminating a functional group from an organic compound having the one functional group reactive with an isocyanate group; R³ is a divalent residue formed by eliminating two isocyanate groups from a diisocyanate compound; R⁴ is a divalent residue formed by eliminating two hydroxyl groups from a diol compound; X¹ and X² are bonds formed by reaction of the functional group of the organic compound with one of the two isocyanate groups of the diisocyanate compound; and m and n = 1 to 20, m + n ≤ 25, and p = 0 to 39, provided that the number of carbodiimide groups in one molecule is 2 to 40.

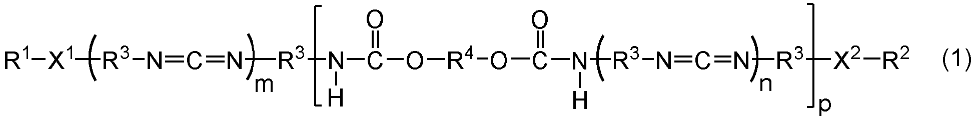

## Description

### Technical Field

The present invention relates to a compatibilizer for polyester resin to improve compatibility among different kinds of resin, and a polyester resin composition using the same.

### Background Art

Polyester resins, in general, since being excellent in transparency, mechanical strength, processability, solvent resistance and the like, are broadly utilized for fibers, films, sheets and the like, and are practically used also in recycling.

In the case of using different kinds of polyester resin or a polyester resin and other resins in combination, the compatibility among resins used in combination is poor and homogeneous polyester resin compositions are hardly obtained in some cases. Polyester resin products produced by using such polyester resin compositions hardly exhibit a sufficient effect expected based on the properties of the resins used in combination.

Hence, in order to homogeneously mix resins poor in compatibility, a compatibilizer is used in some cases. For example, PTL1 describes use of a carbodiimide compound as a compatibilizer in a synthetic fiber of a polymer alloy of an aliphatic polyester resin and a thermoplastic polyamide resin. It is described that the synthetic fiber has a sea-island structure having a high interfacial adhesivity between an island component of the aliphatic polyester resin and a sea component of the thermoplastic polyamide resin.

### Citation List

### Patent Literature

PTL1: JP 2006-233375 A

### Summary of Invention

### Technical Problem

In the synthetic fiber disclosed in PTL1, however, two kinds of resin are divided into a sea component and an island component, and it cannot always be said that as long as the resins are in a sea-island structure state as described in the PTL1, the compatibility is good.

Hence, in order to obtain polyester resin products including different resins in combination in a higher-quality level, compatibilizers are demanded which can make better the compatibility among resins to be used in combination.

The present invention has been achieved under such a situation, and it is the object thereof to provide a compatibilizer for polyester resin which can produce better compatibility than conventional counterparts, and a polyester resin composition using the same.

### Solution to Problem

The present invention is based on the finding that the use of a predetermined polycarbodiimide compound as a compatibilizer for polyester resin gives better compatibility than conventional counterparts.

More specifically, the present invention provides the following [1] to [6].
[1] A compatibilizer for polyester resin, wherein the compatibilizer comprises a polycarbodiimide compound represented by the following formula (1): 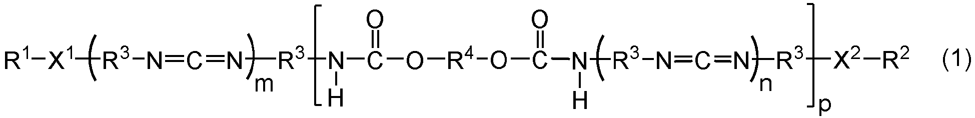 wherein R¹ and R² are each independently a residue formed by eliminating a functional group from an organic compound having the one functional group reactive with an isocyanate group;
   R³ is a divalent residue formed by eliminating two isocyanate groups from a diisocyanate compound, which has a hydrocarbon group bound directly to each of the two isocyanate groups, and a plurality of R³ are identical with or different from each other;
   R⁴ is a divalent residue formed by eliminating two hydroxyl groups from a diol compound, and in the case where there are a plurality of R⁴, the plurality of R⁴ are identical with or different from each other;
   X¹ and X² are each independently a bond formed by reaction of the functional group of the organic compound with one of the two isocyanate groups of the diisocyanate compound; and
   m and n each independently denote a number of 1 to 20, a sum of m and n is 25 or less, and p denotes a number of 0 to 39, provided that a number of carbodiimide groups in one molecule is 2 to 40,
      and wherein the carbodiimide equivalent of the polycarbodiimide compound is 280 or higher.
[2] The compatibilizer according to the above [1], wherein the carbodiimide equivalent is 1,000 or lower.
[3] The compatibilizer according to the above [1] or [2], wherein resins to be compatibilized are two polyester resins, and the two polyester resins have a difference of 0.20 (cal/cm³)^{1/2} or higher in solubility parameter as determined by the Fedors method.
[4] The compatibilizer according to the above [1] or [2], wherein resins to be compatibilized are a polyester resin and a polyamide resin.
[5] A polyester resin composition, comprising a compatibilizer according to any one of the above [1] to [4], and a polyester resin.
[6] The polyester resin composition according to the above [5], wherein a content of the polycarbodiimide compound is 0.1 to 10.0 parts by mass with respect to 100 parts by mass in total of the resins in the polyester resin composition.

### Advantageous Effects of Invention

The compatibilizer of the present invention can suitably be applied to polyester resins and can well compatibilize different kinds of resin.

Therefore, use of the compatibilizer can provide homogeneous polyester resin compositions and thus polyester resin products which effectively exhibit good properties of the resins used in combination. By using the compatibilizer, the polyester resin products are obtained as ones having good hydrolysis resistance.

### Description of Embodiments

Hereinafter, there will be described in detail the compatibilizer of the present invention and the polyester resin composition using the same.

### [Compatibilizer]

The compatibilizer of the present invention is a compatibilizer for polyester resin, characterized by comprising a polycarbodiimide compound represented by the formula (1) described below wherein the carbodiimide equivalent of the polycarbodiimide compound is 280 or higher.

Applying such a compatibilizer of a polycarbodiimide compound to a polyester resin can make a good compatibility among different resins.

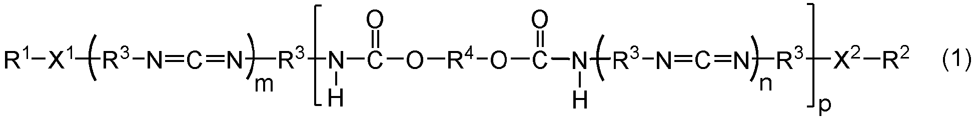

In the formula (1), R¹ and R² are each independently a residue formed by eliminating a functional group from an organic compound having the one functional group reactive with an isocyanate group.

R³ is a divalent residue formed by eliminating two isocyanate groups from a diisocyanate compound, which has a hydrocarbon group bound directly to each of the two isocyanate groups, and a plurality of R³ are identical with or different from each other.

R⁴ is a divalent residue formed by eliminating two hydroxyl groups from a diol compound, and in the case where there are a plurality of R⁴, the plurality of R⁴ are identical with or different from each other.

X¹ and X² are each independently a bond formed by reaction of the functional group of the organic compound with one of the two isocyanate groups of the diisocyanate compound.

m and n each independently denote a number of 1 to 20, the sum of m and n is 25 or less, and p denotes a number of 0 to 39, provided that a number of carbodiimide groups in one molecule is 2 to 40.

### (Polycarbodiimide compound)

The polycarbodiimide compound contained in the compatibilizer of the present invention is represented by the above formula (1) wherein the carbodiimide equivalent is 280 or higher. Here, the polycarbodiimide compound is a compound having a plurality of carbodiimide groups in one molecule, and in the polycarbodiimide compound in the present invention, the number of the carbodiimide groups is 2 to 40.

### <R¹ and R²>

R¹ and R² in the formula (1) are residues formed by eliminating a functional group from an organic compound having the one functional group reactive with an isocyanate group. The organic compound is, in the compound represented by the formula (1), a terminal blocking agent blocking a terminal isocyanate group. The R¹ and R² may be identical with or different from each other.

Examples of the functional group reactive with an isocyanate group includes a hydroxyl group, an amino group, an isocyanate group and a carboxyl group. In the case where the functional group is a hydroxyl group, by reaction of the functional group with an isocyanate group, a urethane bond is formed.
Then, in the case where the functional group is an amino group, a urea bond is formed; in the case of an isocyanate group, a carbodiimide bond; and in the case of a carboxyl group, an amido bond is formed, respectively. The bond formed by reaction of each functional group with an isocyanate group corresponds to X¹ and X² in the formula (1).

Examples of the organic compound includes monoisocyanates, monoalcohols, monoamines, monocarboxylic acids and carboxylic anhydrides. The organic compound may be used singly in one kind thereof or in two or more kinds thereof.

Examples of the monoisocyanates include methyl isocyanate, ethyl isocyanate, propyl isocyanate, butyl isocyanate, cyclohexyl isocyanate, phenyl isocyanate, tolyl isocyanate, dimethylphenyl isocyanate and 2,6-diisopropylphenyl isocyanate.

Examples of the monoalcohols include methanol, ethanol, 1-propanol, cyclohexanol, 2-ethylhexanol, (poly)ethylene glycol monomethyl ether, (poly)propylene glycol monomethyl ether, phenol, cresol and naphthol.

Examples of the monamines include butylamine, pentylamine, cyclohexylamine, diethylamine, dipropylamine, dibutyl amine and dicyclohexylamine.

Examples of the monocarboxylic acids include formic acid, acetic acid, propionic acid, butanoic acid, pentanoic acid, hexanoic acid, heptanoic acid, octanoic acid, nonanoic acid, decanoic acid, cyclohexanecarboxylic acid, adamantaneacetic acid, benzoic acid and phenylacetic acid.

Examples of the carboxylic anhydrides include phthalic anhydride, acetic anhydride, succinic anhydride, maleic anhydride and benzoic anhydride.

### <X¹ and X²>

X¹ and X² in the formula (1) each independently denote a bond formed by reaction of the functional group of the organic compound with one isocyanate group of the diisocyanate compound, which is a compound from which R³ is derived. X¹ and X² are each as described above, a bond corresponding to the organic compound, and may be identical with or different from each other.

It is preferable that the bonds of X¹ and X² are each a urethane bond, a urea bond or a carbodiimide bond, from the viewpoint of improvement in the compatibility of the polyester resin.

### <R³>

R³ in the formula (1) is a divalent residue formed by eliminating two isocyanate groups from the diisocyanate compound. The diisocyanate compound has a hydrocarbon group bound directly to the two isocyanate groups. A plurality of R³ may be identical with or different from each other.

The diisocyanate compound is not especially limited, and there can be used any of chain or alicyclic aliphatic diisocyanate compounds, aromatic diisocyanate compounds or heterocyclic diisocyanate compounds, and these may be used singly in one kind or in two or more kinds.

Examples of the chain aliphatic diisocyanate compounds include tetramethylene diisocyanate, hexamethylene diisocyanate, dodecamethylene diisocyanate and 2,2,4-trimethylhexamethylene diisocyanate.

Examples of the alicyclic diisocyanate compounds include 1,3-bis(isocyanatomethyl)cyclohexane, 1,4-bis(isocyanatomethyl)cyclohexane, 2,2-bis(4-isocyanatocyclohexyl)propane, isophorone diisocyanate and dicyclohexylmethane-4,4'-diisocyanate.

Examples of the aromatic diisocyanate compounds include tolylene diisocyanate, diphenylmethane diisocyanate and 2,4,6-triisopropylbenzene-1,3-diyl diisocyanate.

Examples of the aliphatic diisocyanate compounds containing the aromatic ring include m-xylylene diisocyanate and 1,3-bis(2-isocyanato-2-propyl)benzene (trivial name: tetramethylxylylene diisocyanate).

Among these, from the viewpoint of easy availability, ease of control of the carbodiimide equivalent of and synthesis of the polycarbodiimide compound, and the like, it is preferable that the diisocyanate compound is dicyclohexylmethane-4,4'-diisocyanate, isophorone diisocyanate, 4,4'-diphenylmethane diisocyanate and tetramethylxylylene diisocyanate, and more preferable is dicyclohexylmethane-4,4'-diisocyanate.

### <R⁴>

R⁴ in the formula (1) is a divalent residue formed by eliminating two hydroxyl groups from a diol compound. In the case where there are a plurality of R⁴ in the formula (1), these R⁴ may be identical with or different from each other.

The diol compound forms urethane bonds by reaction of each of two hydroxyl groups of the diol compound with one isocyanate group of the diisocyanate compound. Thereby, the polycarbodiimide compound represented by the formula (1) which has a structure in which a urethane bond is introduced to a carbodiimide segment [(R³-N=C=N)ₙ] can be obtained.

Though depending on the kind of resin to be added to which the compatibilizer is applied, the polycarbodiimide compound in which such urethane bonds are introduced can also well improve the compatibility of the polyester resin, and the polyester resin product obtained from the compatibilized polyester resin composition can be made one having good hydrolysis resistance.

From the viewpoint of the hydrolysis resistance of the polyester resin product obtained from the polyester resin composition containing the compatibilizer, the ease of synthesis of the carbodiimide compound, and the like, the diol compound preferably has a molecular weight of 500 or lower, and is more preferably a low-molecular compound of 300 or lower and still more preferably of 100 or lower. From the similar viewpoint, it is preferable that R⁴ is a hydrocarbon group.

Examples of the diol compound include ethylene glycol, propylene glycol, 1,4-butanediol and 1,3-butanediol. The diol compound may be used singly in one kind thereof or in two or more kinds thereof. Among these, ethylene glycol and 1,4-butanediol are preferable.

### <m and n>

m and n in the formula (1) are the numbers of a carbodiimide segment [(R³-N=C=N)ₘ] and the carbodiimide segment [(R³-N=C=N)ₙ] formed by polymerization (decarboxylation condensation reaction) of the diisocyanate compounds, respectively, and represent respective average degrees of polymerization of the carbodiimide group. m and n are each the number of 1 to 20, preferably the number of 1 to 10, more preferably 2 to 8. Then, the sum of m and n is 25 or less. m and n may be identical or different.

In the case where m or n exceeds 20, and in the case where the sum of m and n exceeds 25, it is difficult for the compatibilizer to improve the compatibility of the polyester resin; and due to a large number of the carbodiimide group in one molecule of the polycarbodiimide compound, the polyester resin composition to which the compatibilizer is added is easily increased in viscosity, and is inferior in the processability such as kneading and forming, so the cases are not preferable.

### <p>

p in the formula (1) is the number of units containing the carbodiimide segment [(R³-N=C=N)ₙ] and two urethane bonds introduced to the carbodiimide segment by the diol compound. p is the number of 0 to 39, preferably the number of 0 to 20 and more preferably 0 to 10.

In the polycarbodiimide compound, p may be p = 0 or p may be p ≠ 0. That is, the polycarbodiimide compound may have a unit(s) containing the two urethane bonds, or may have no unit. In either case, the polycarbodiimide compound can improve the compatibility of the polyester resin.

In the case where the p exceeds 39, the polyester resin composition to which the polycarbodiimide compound is added is easily increased in viscosity, and is inferior in the processability such as kneading and forming, so the case is not preferable.

The number of the carbodiimide group in one molecule of the polycarbodiimide compound is 2 to 40, and more preferably 4 to 30 and still more preferably 6 to 20.

Then, the number of the carbodiimide group used here, in the case where X¹ and/or X² is a carbodiimide group, includes also the numbers thereof.

### <Carbodiimide equivalent>

In the polycarbodiimide compound, the carbodiimide equivalent (chemical formula weight per mol of the carbodiimide group) is 280 or higher, preferably 280 to 1,000, more preferably 280 to 800 and still more preferably 280 to 600.

The polycarbodiimide compound having a lower carbodiimide equivalent can impart better hydrolysis resistance to the polyester resin, but in the case of being too low, it becomes difficult for the good compatibility of the polyester resin to be obtained. When the carbodiimide equivalent is 280 or higher, the compatibility of the polyester resin can be improved.

It is preferable that the upper limit value of the carbodiimide equivalent is 1,000 or lower, from the viewpoint of the improvement in the hydrolysis resistance and the good compatibility of the polyester resin.

### (Method for producing the polycarbodiimide compound)

A method for producing the polycarbodiimide compound is not especially limited, and a well-known method for producing can be used and carried out.

In the case where in the polycarbodiimide compound, p = 0 in the formula (1), that is, the polycarbodiimide compound has a structure having no unit containing two urethane bonds introduced to the carbodiimide segment [(R³-N=C=N)_{n]} by the diol compound, examples of the method include synthesis methods indicated in the following (a-1) to (a-3).
(a-1) A method in which the diisocyanate compound is subjected to carbodiimidization reaction in the presence of a catalyst to obtain an isocyanate-terminated polycarbodiimide, and then subjected to terminal blocking reaction by adding the organic compound (terminal blocking agent).
(a-2) A method in which the diisocyanate compound and the organic compound (terminal blocking agent) are mixed, and subjected to carbodiimidization reaction and terminal blocking reaction in the presence of a catalyst.
(a-3) A method in which the diisocyanate compound and the organic compound (terminal blocking agent) are reacted for the isocyanate group to be subjected to terminal blocking reaction, and then, subjected to carbodiimidization reaction in the presence of a catalyst.

Among these synthesis methods, from the viewpoint of control of the carbodiimide equivalent, the production efficiency, and the like, the method of (a-1) is preferable.

In the case where in the polycarbodiimide compound, p ≠ 0 in the formula (1), that is, the polycarbodiimide compound has a structure having the above-mentioned unit(s) containing two urethane bonds, examples of the method include synthesis methods indicated in the following (b-1) to (b-3).
(b-1) A method in which the diisocyanate compound is subjected to carbodiimidization reaction in the presence of a catalyst to obtain an isocyanate-terminated polycarbodiimide, and then subjected to urethanization reaction and terminal blocking reaction by adding the organic compound (terminal blocking agent) and the diol compound.
(b-2) A method in which the diisocyanate compound, the diol compound and the organic compound (terminal blocking agent) are mixed, and subjected to urethanization reaction, carbodiimidization reaction and terminal blocking reaction in the presence of a catalyst.
(b-3) A method in which a part of the diisocyanate compound and the diol compound are subjected to urethanization reaction to obtain a urethane bond-introduced isocyanate-terminated polycarbodiimide, and then, the urethane bond-introduced isocyanate-terminated polycarbodiimide, the rest of the diisocyanate compound and the organic compound (terminal blocking agent) are mixed and subjected to carbodiimidization reaction and terminal blocking reaction in the presence of a catalyst.

Among these synthesis methods, from the viewpoint of control of the carbodiimide equivalent, the production efficiency, and the like, the method of (b-1) is preferable.

### <Carbodiimidization reaction>

It is preferable that the carbodiimidization reaction is, for example, polymerization (decarboxylation condensation reaction) of the diisocyanate compound in the presence of a carbodiimidization catalyst.

Examples of the carbodiimidization catalyst include phospholene oxides such as 1-phenyl-2-phospholene-1-oxide, 3-methyl-1-phenyl-2-phospholene-1-oxide, 1-ethyl-2-phospholene-1-oxide and 3-methyl-2-phsopholene-1-oxide, and 3-phospholene isomers thereof. Among these, from the viewpoint of reactivity, easy availability and the like, 3-methyl-1-phenyl-2-phospholene-1-oxide is preferable.

The amount of the carbodiimidization catalyst to be used is usually, with respect to 100 parts by mass of the diisocyanate compound, preferably 0.01 to 10 parts by mass, more preferably 0.05 to 5 parts by mass and still more preferably 0.07 to 1 part by mass.

The decarboxylation condensation reaction of the diisocyanate compound can be carried out either in a solvent or in no solvent. Examples of the solvent to be used include alicyclic ethers such as tetrahydrofuran, 1,3-dioxane and dioxolane; aromatic hydrocarbons such as benzene, toluene, xylene and ethylbenzene; halogenated hydrocarbons such as chlorobenzene, dichlorobenzene, trichlorobenzene, perchlene, trichloroethane and dichloroethane; and cyclohexanone. These may be used singly or in combination of two or more.

In the case of carrying out the reaction in the solvent, the concentration of the diisocyanate compound is made to be, from the viewpoint of homogenization of the reaction system, preferably 5 to 55% by mass and more preferably 5 to 20% by mass.

The reaction temperature of the decarboxylation condensation reaction is suitably established according to suitable reaction promotion, the degree of polymerization of the carbodiimide group, and the like. The temperature is usually preferably 40 to 250°C, more preferably 90 to 230°C and still more preferably 100 to 200°C. In the case of carrying out the reaction in the solvent, it is preferable that the temperature is a temperature in the range of 40°C to the boiling point of the solvent.

Then, the reaction time is suitably established according to the reaction temperature, the degree of polymerization of the carbodiimide group, and the like. The time is usually preferably 0.5 to 100 hours, more preferably 1 to 70 hours and still more preferably 2 to 30 hours.

Further, it is preferable that the reaction is carried out in an inert gas atmosphere such as nitrogen gas or rare gas.

### <Urethanization reaction and terminal blocking reaction>

The urethanization reaction is a reaction of an isocyanate group with a hydroxyl group, and can be carried out, for example, in the above method of (b-1), by heating the isocyanate-terminated polycarbodiimide, the organic compound (terminal blocking agent) and the diol compound, which are reaction components.

The time for addition of the each reaction component is not especially limited, but from the viewpoint of workability, it is preferable to simultaneously mix all the components; and from the viewpoint of suppressing side reactions, it is preferable that after the isocyanate-terminated polycarbodiimide and the organic compound (terminal blocking agent) are mixed and the terminal blocking reaction is finished, the diol compound is added.

The reaction temperature of the urethanization reaction and the terminal blocking reaction is suitably established in the range of being capable of suppressing side reactions and promoting the reaction. The temperature is usually preferably 20 to 250°C, more preferably 90 to 220°C and still more preferably 130 to 200°C.

Then, the reaction time is suitably established in the range of being capable of suppressing the reaction temperature and side reactions. The time is usually preferably 0.1 to 20 hours, more preferably 0.5 to 10 hours and still more preferably 1 to 3 hours.

### (Other components)

The compatibilizer may contain, in addition to the polycarbodiimide compound, as required, well-known additives applied to polyester resins, for example, an antioxidant, a flame retardant, an ultraviolet absorbent and a colorant. By using a compatibilizer containing such additives previously blended therein, in preparation of the polyester resin composition, labor for separately adding the additives can be saved and making the work efficiency high can be achieved.

However, from the viewpoint of not inhibiting the effect of improving the compatibility of the polyester resin by the polycarbodiimide compound, the content of the polycarbodiimide compound is, in 100% by mass of the compatibilizer, preferably 85 to 100% by mass, more preferably 90 to 100% by mass and still more preferably 95 to 100% by mass.

### (Polyester resin)

The compatibilizer is a compatibilizer for polyester resin. At least one kind of resin to be compatibilized with the compatibilizer is a polyester resin. The compatibilizer can well compatibilize different kinds of polyester resin or a polyester resin and a polyamide resin.

The polyester resin can suitably be selected from resins having, as a basic structure, a polycondensate of a polycarboxylic acid and a polyhydric alcohol, a polycondensate of a hydroxyacid, and the like.

Examples of the polyester resin include polyethylene terephthalate (PET), polybutylene terephthalate (PBT), polybutylene succinate (PBS), polybutylene succinate adipate (PBSA), polybutylene adipate terephthalate (PBAT), polyhydroxyalkanoic acids (PHA) such as polylactic acid (PLA) and polyhydroxybutyric acid (PHB), polycaprolactone (PCL), polyethylene naphthalate, polyarylate and ethylene terephthalate-isophthalate copolymers. These may be used singly or in combination of two or more. Among these, from the viewpoint of easy industrial availability and recycling utilization, there are included PET, PBT, PBS, PBSA, PLA and PHB. Further from the viewpoint of biomass plastics, there are included, for example, PLA and PHB.

When a polyester resin composition is prepared by using different kinds of polyester resin in combination, if the difference in solubility parameter (SP value) as determined by the Fedors method between a polyester resin (A) and a polyester resin (B), which are of different kinds, is 0.20 (cal/cm³)^{1/2} or higher, the resins are usually inferior in compatibility. Examples of such resins include PLA (11.10) and PBS (10.85), PLA (11.10) and PBSA (10.44 to 10.85), PET (12.39) and PLA (11.10), and PLA (11.10) and PCL (10.16) (numerical values in parentheses indicate SP values [(cal/cm³)^{1/2}]).

The compatibilizer can be applied to any kinds of polyester resin, and is effective on improving the compatibility particularly between polyester resins having the difference in SP value of being as high as 0.20 (cal/cm³)^{1/2} or higher as described above.

In the case where resins to be compatibilized are a polyester resin and a polyamide resin, the polyamide resin is not especially limited, but examples thereof include nylon 6 and nylon 66, which are general-purpose resins. The compatibilizer, also when the polyester resin and the polyamide resin are used in combination to prepare a polyester resin composition, can effectively improve the compatibility between both resins.

### [Polyester resin composition]

The polyester resin composition of the present invention comprises the compatibilizer and a polyester resin.

In the case of compatibilizing different kinds of polyester resin, the polyester resin composition contains two or more kinds of polyester resin.

The polyester resin composition may contain a polyamide resin; in this case, as described above, the compatibilizer well compatibilizes the polyester resin and the polyamide resin. In this case, the polyester resin composition contains one kind of polyester resin singly or two or more kinds thereof.

Then, whether the compatibility among resins to be compatibilized is good or bad can be judged by using, as an index, a haze of a sheet formed product (test piece) of the polyester resin composition. The haze is a value measured by a method according to JIS K 7136:2000, that is, which value can be measured, specifically by the method described in Examples described below, using a percentage of transmitted light deviated through 2.5° or larger from incident light by forward scattering out of transmitting light passing through the test piece. The lower the haze value, the less the light scattering and the better the light transmission properties of the test piece. In the case where the light transmission properties are thus good, it can be said that the compatibility among resins used in combination in the polyester resin composition is good.

The polyester resin composition, from the viewpoint of the performance and the like demanded in its applications, may contain, in addition to the additives previously contained in the compatibilizer, as required, well-known additives applied to polyester resins, for example, an antioxidant, a flame retardant, an ultraviolet absorbent and a colorant, in the range of not impairing the advantageous effects of the present invention.

In the polyester resin composition, the content of the polycarbodiimide compound is, with respect to 100 parts by mass of the polyester resin, preferably 0.1 to 10.0 parts by mass, more preferably 0.3 to 8.0 parts by mass and still more preferably 0.5 to 5.0 parts by mass.

When the content is 0.1 part by mass or higher, the effect of excellently improving the compatibility of the polyester resin can be attained. Then, when the content is 10.0 parts by mass or lower, there can be suppressed the lowering of processability of kneading, forming and the like along with an increase in viscosity due to a high content of the polycarbodiimide compound.

In the case where in the polyester resin composition, for example, a polyester resin (A) and a polyester resin (B), which are of different kinds, are compatibilized, the polyester resin composition can be obtained by melt kneading the compatibilizer and the polyester resin (A) and the polyester resin (B). At this time, a mixture may be melt kneaded which is obtained by previously mixing the compatibilizer with the polyester resin (A) and/or the polyester resin (B), or alternatively, the compatibilizer may be added to the polyester resin (A) and/or polyester resin (B) melted, and kneaded. Alternatively, a resin compound as a master batch and the like may be once prepared by one of these methods, and the resin compound may be melt kneaded with the polyester resin (A) and/or the polyester resin (B).

Then, for example, in the case of compatibilizing the polyester resin (A) and a polyamide resin, by replacing the polyester resin (B) by the polyamide resin, and by melt kneading the resultant similarly to the above, a polyester resin composition can be obtained.

Here, in addition to the compatibilizer, the above additives may be added in the range of not impairing the advantageous effects of the present invention.

Means of melt kneading is not especially limited, and the melt kneading can be carried out by using a well-known kneading machine. Examples of the kneading machine include single-screw or double-screw extruding machines and roll mixing machines.

Production of polyester resin products using the polyester resin composition can be carried out by forming using a well-known method such as injection molding, film forming, blow molding or foaming. The polyester resin composition can be formed into various forms such as films, sheets or blocks at a temperature of not lower than the melting temperatures of the resins contained in the polyester resin composition.

### Examples

Hereinafter, the present invention will be described in detail by way of Examples, but the present invention is not any more limited thereto.

### [Synthesis of polycarbodiimide compounds]

There are indicated below the details of raw material compounds used for synthesis of polycarbodiimide compounds in the following Synthesis Examples and Synthesis Comparative Examples.

### <Diisocyanate compounds>

- HMDI: dicyclohexylmethane-4,4'-diisocyanate
- TMXDI: tetramethylxylylene diisocyanate
- IPDI: isophorone diisocyanate
- MDI: 4,4'-diphenylmethane diisocyanate

### <Organic compounds (terminal blocking agents)>

- CHA: cyclohexylamine
- CHI: cyclohexyl isocyanate
- 2EH: 2-ethylhexanol
- MPG: polyethylene glycol monomethyl ether (tetraethylene glycol monomethyl ether)

### <Diol compounds>

- EG: ethylene glycol
- BD: 1,4-butanediol

Various analyses and measurements in synthesis of the polycarbodiimide compounds were carried out by using apparatuses or methods indicated in the below.

### <Infrared absorption (IR) spectrum measurement>

Apparatus used: a Fourier transform infrared spectrophotometer "FTIR-8200PC" (manufactured by Shimadzu Corp.)

### <Degree of polymerization of the carbodiimide group>

Apparatus used: an automatic titrator "COM-900" (manufactured by Hiranuma Sangyo Corp.), "Titstation K-900" (manufactured by Hiranuma Sangyo Corp.)

An isocyanate-terminated polycarbodiimide obtained by carbodiimidization reaction was mixed with a toluene solution of dibutylamine in a known concentration to react the isocyanate group of the isocyanate-terminated polycarbodiimide with dibutylamine. Remaining dibutylamine was subjected to neutralization titration with a hydrochloric acid standard solution to calculate the amount of the isocyanate group remaining (amount of the terminal NCO [% by mass]). From this terminal NCO amount, the average degree of polymerization of the carbodiimide group was determined.

### (Synthesis Example 1)

100 parts by mass of HMDI, and 0.5 part by mass of 3-methyl-1-phenyl-2-phospholene-1-oxide as a carbodiimidization catalyst were charged in a reaction vessel with a reflux tube and a stirrer, and stirred and mixed in a nitrogen flow at 185°C for 6.5 hours to carry out carbodiimidization reaction to thereby obtain an isocyanate-terminated polycarbodiimide.

The obtained isocyanate-terminated polycarbodiimide was subjected to IR spectrum measurement and there was confirmed an absorption peak by the carbodiimide group at a wavelength of about 2150 cm⁻¹. The terminal NCO amount was 12.02% by mass and the average degree of polymerization of the carbodiimide group was 2.

Then, 25.2 parts by mass (the same molar equivalent as that of the terminal isocyanate group of the isocyanate-terminated polycarbodiimide) of CHA was added to the isocyanate-terminated polycarbodiimide in a nitrogen flow at 150°C, and stirred and mixed for 0.5 hour to carry out blocking reaction (terminal blocking reaction) of the terminal isocyanate group.

It was confirmed that in IR spectrum measurement, the absorption peak of the isocyanate group at a wavelength of 2,200 to 2,300 cm⁻¹ disappeared, and thereafter, a reaction product was taken out from the reaction vessel and cooled to room temperature to thereby obtain a pale yellow transparent solid polycarbodiimide compound (carbodiimide equivalent: 448). This was to be used as a compatibilizer P1.

### (Synthesis Examples 2 to 6 and Synthesis Comparative Examples 1 to 5)

There were synthesized as in Synthesis Example 1, respective polycarbodiimide compounds having the numbers of the carbodiimide group and carbodiimide equivalents indicated in the following Table 1, respectively, except for altering the diisocyanate compound and the organic compound (terminal blocking agent) in Synthesis Example 1 to those indicated in the following Table 1, respectively. These were to be used as compatibilizers P2 to P6 and P11 to P15, respectively. Here, the compatibilizer P11 was a carbodiimide compound having the number of the carbodiimide group of 1.

### (Synthesis Example 7)

100 parts by mass of MDI, and 13.2 parts by mass of CHA were charged in a reaction vessel with a reflux tube and a stirrer, and stirred and mixed in a nitrogen flow at room temperature (25°C) for 0.5 hour to carry out terminal blocking reaction of MDI; then, 0.5 part by mass of 3-methyl-1-phenyl-2-phospholene-1-oxide as a carbodiimidization catalyst was added and stirred and mixed at 110°C for 2.0 hours to carry out carbodiimidization reaction to thereby obtain a pale yellow transparent solid polycarbodiimide compound (carbodiimide equivalent: 296). This was to be used as a compatibilizer P7.

### (Synthesis Examples 8 to 10 and Synthesis Comparative Example 6)

There were synthesized as in Synthesis Example 1, respective polycarbodiimide compounds having the numbers of the carbodiimide group and carbodiimide equivalents indicated in the following Table 1, respectively, except for altering the organic compound (terminal blocking agent) in Synthesis Example 1 to those indicated in the following Table 1, and adding diol compounds indicated in the following Table 1 together with the organic compound (terminal blocking agent), respectively. These were to be used as compatibilizers P8 to P10 and P16, respectively.

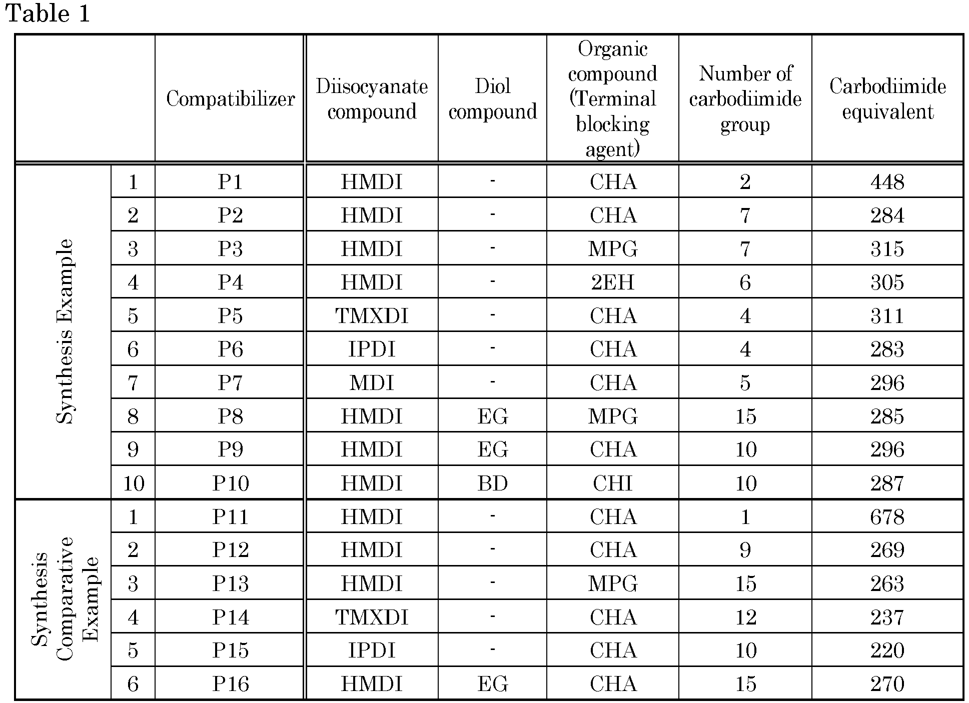

### [Preparation of polyester resin compositions]

Various polyester resin compositions were prepared by using the respective compatibilizers obtained in the above Synthesis Examples and Synthesis Comparative Examples, and using polyester resins (and polyamide resin) indicated below.

### <Polyester resins>

- PBSA: a polybutylene succinate adipate: "BioPBS(R) FD-92PM", manufactured by PTT MCC Biochem Co., Ltd.
- PLA: a polylactic acid: "Ingeo(R) Biopolymer 4032D", manufactured by Nature Works LLC
- PBS: a polybutylene succinate
- PET: a polyethylene terephthalate: "TRN-8550FF", manufactured by Teijin Ltd.

### <Polyamide resin>

- Ny6: a nylon 6: "Unitika Nylon 6 A1030BRL", manufactured by Unitika Ltd.

### (Examples 1-1 to 1-12 and Comparative Examples 1-1 to 1-8)

Respective polyester resin compositions (PLA/PBSA) were prepared, by using a labomixer ("Segment Mixer KF70V", manufactured by Toyo Seiki

Seisaku-sho Ltd., Labo Plastomill(R), hereinafter, the same applies), by melting 90 parts by mass of PLA and 10 parts by mass of PBSA at 210°C, and thereafter adding predetermined amounts of the compatibilizers indicated in the following Table 2 and kneading the mixtures for 3 min, respectively.

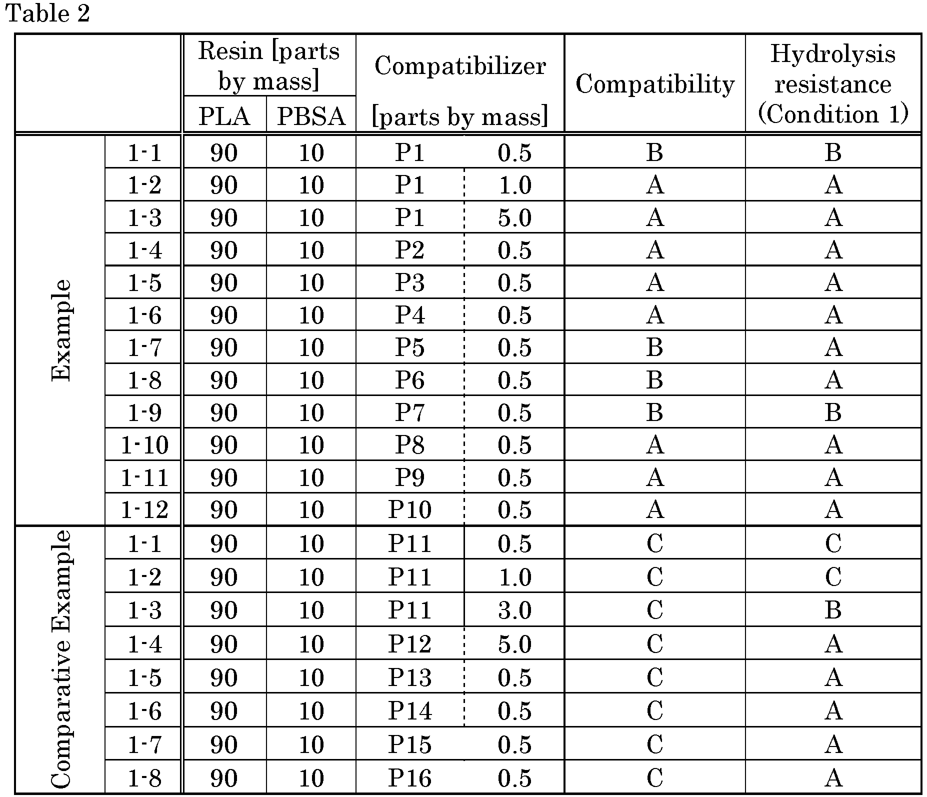

### (Examples 2-1 to 2-15 and Comparative Examples 2-1 to 2-11)

Respective polyester resin compositions (PLA/PBS) were prepared, by using the labomixer, by melting predetermined amounts indicated in the following Table 3 of PLA and PBS (total 100 parts by mass) at 210°C, and thereafter adding predetermined amounts of the compatibilizers indicated in the following Table 3 and kneading the mixtures for 3 min, respectively.

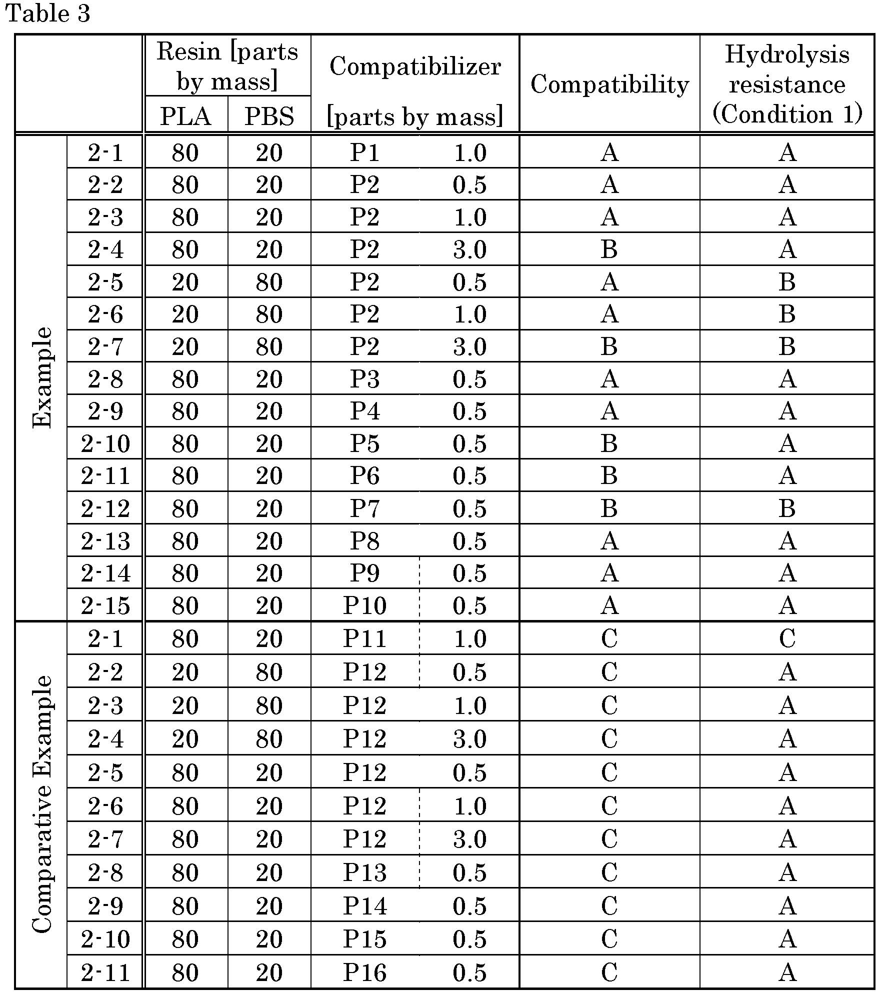

### (Examples 3-1 to 3-12 and Comparative Examples 3-1 to 3-8)

Respective polyester resin compositions (PET/Ny6) were prepared, by using the labomixer, by melting predetermined amounts indicated in the following Table 4 of PET and Ny6 (total 100 parts by mass) at 260°C, and thereafter adding predetermined amounts of the compatibilizers indicated in the following Table 4 and kneading the mixtures for 3 min, respectively.

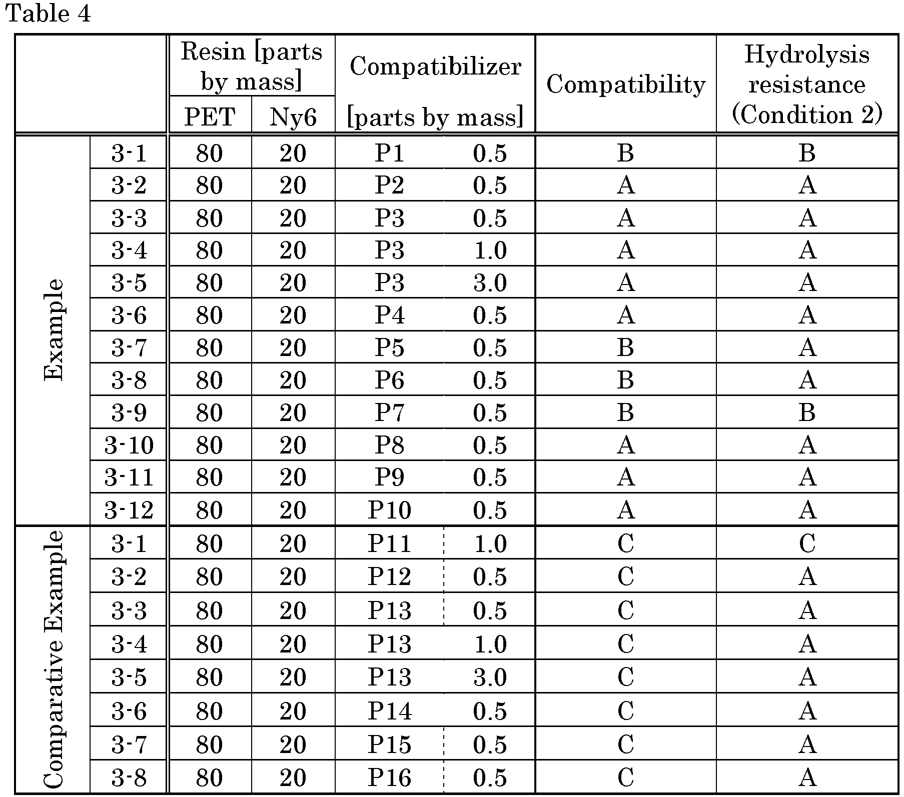

### [Evaluation items]

The respective polyester resin compositions obtained in the above were evaluated for the compatibility and the hydrolysis resistance. These evaluation results are shown collectively in the above Tables 2 to 4.

### (Compatibility)

The polyester resin compositions were each formed into a sheet of 150 to 200 µm in thickness by a heat press to thereby fabricate a test piece (50 mm × 50 mm). The heat press temperature was set at 210°C for the polyester resin compositions (PLA/PBSA) and the polyester resin compositions (PLA/PBS), and was set at 260°C for the polyester resin compositions (PET/Ny6).

Respective blank test pieces were fabricated as in the above test pieces, by using polyester resin compositions obtained by carrying out the same procedure as in the preparation of the above polyester resin compositions, respectively, except for adding no polycarbodiimide compound.

For the test pieces and the blank test pieces, the haze was measured by a method according to JIS K 7136:2000 using a haze meter ("NDH5000", manufactured by Nippon Denshoku Industries Co., Ltd.).

The lower the haze value, the less the light scattering and the better the light transmission properties of the test piece. In the case where the compatibility between two kinds of resin in each polyester resin composition was good, the light transmission properties of the test piece were good and the haze value became low. Hence, the haze value was used as an index of the compatibility.

It can be said that the larger the difference (ΔH) obtained by subtracting the haze value of the test piece from the haze value (reference value) of the blank test piece, the better the effect of the polycarbodiimide compound added as the compatibilizer.

In the above Tables 2 to 4, the evaluation results are shown by taking the case where the ΔH was 10% or higher as A; 5% or higher and lower than 10%, as B; and lower than 5%, as C.

### (Hydrolysis resistance)

The polyester resin compositions were each formed into a sheet of 150 to 200 µm in thickness by a heat press to thereby fabricate a strip test piece (10 mm in width × 10 cm in length). The heat press temperature was set at 210°C for the polyester resin compositions (PLA/PBSA) and the polyester resin compositions (PLA/PBS), and was set at 260°C for the polyester resin compositions (PET/Ny6).

Right after the fabrication (initially) and after a predetermined wet heat treatment, the test piece was subjected to a tensile test. The wet heat treatment was carried out, for the polyester resin compositions (PLA/PBSA) and the polyester resin compositions (PLA/PBS), by exposing the test piece to a temperature of 70°C and a relative humidity of 90% for 200 hours in a wet heat tester (Condition 1). For the polyester resin compositions (PET/Ny6), the wet heat treatment was carried out by exposing the test piece to a temperature of 121°C and a pressure of 2 atm for 48 hours in a highly accelerated stress tester (pressure cooker test) (Condition 2).

The tensile test was carried out by using a tensile tester ("3365", manufactured by Instron Corp.) and by measuring the tensile elongation at break of the test piece under the conditions of a distance between marked lines of 30 mm and a tension rate of 100 mm/min. The initial tensile elongation was taken to be 100 and the relative ratio of the tensile elongation after the wet heat treatment thereto was calculated.

It can be said that the higher the relative ratio of the tensile elongation, the lower the degree of decreasing of the tensile elongation after the wet heat treatment and the better the hydrolysis resistance.

In the above Tables 2 to 4, the evaluation results are shown by taking the case where the relative ratio of the tensile elongation was 80 or higher as A; 60 or higher and lower than 80, as B; and lower than 60, as C. Then, for comparative reference, also on the case of no addition of the polycarbodiimide compound, the same tensile test as in the above was carried out, and the evaluation result was C.

As is clear from the evaluation results in Tables 2 to 4, it was observed that the compatibilizer of the present invention was able to improve the compatibility among the resins in the polyester resin composition and was able to make good the compatibility of the polyester resin. It was also observed that according to the polyester resin composition using the compatibilizer, formed products having good hydrolysis resistance were obtained.

## Claims

1. A compatibilizer for polyester resin, wherein the compatibilizer comprises a polycarbodiimide compound represented by the following formula (1): 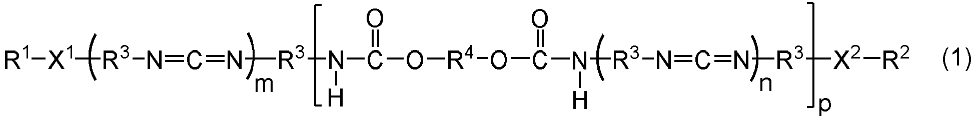 wherein R¹ and R² are each independently a residue formed by eliminating a functional group from an organic compound having the one functional group reactive with an isocyanate group;
R³ is a divalent residue formed by eliminating two isocyanate groups from a diisocyanate compound, which has a hydrocarbon group bound directly to each of the two isocyanate groups, and a plurality of R³ are identical with or different from each other;
R⁴ is a divalent residue formed by eliminating two hydroxyl groups from a diol compound, and in the case where there are a plurality of R⁴, the plurality of R⁴ are identical with or different from each other;
X¹ and X² are each independently a bond formed by reaction of the functional group of the organic compound with one of the two isocyanate groups of the diisocyanate compound; and
m and n each independently denote a number of 1 to 20, a sum of m and n is 25 or less, and p denotes a number of 0 to 39, provided that a number of carbodiimide groups in one molecule is 2 to 40,
and wherein a carbodiimide equivalent of the polycarbodiimide compound is 280 or higher.

2. The compatibilizer according to claim 1, wherein the carbodiimide equivalent is 1,000 or lower.

3. The compatibilizer according to claim 1 or 2, wherein resins to be compatibilized are two polyester resins, and the two polyester resins have a difference of 0.20 (cal/cm³)^{1/2} or higher in solubility parameter as determined by the Fedors method.

4. The compatibilizer according to claim 1 or 2, wherein resins to be compatibilized are a polyester resin and a polyamide resin.

5. A polyester resin composition, comprising a compatibilizer according to any one of claims 1 to 4, and a polyester resin.

6. The polyester resin composition according to claim 5, wherein a content of the polycarbodiimide compound is 0.1 to 10.0 parts by mass with respect to 100 parts by mass in total of the resins in the polyester resin composition.
